# EUROPÄISCHE PATENTSCHRIFT

(11) **EP 1 612 872 B1**
(45) Veröffentlichungstag und Bekanntmachung des Hinweises auf die Patenterteilung: **20.03.2013**
(21) Anmeldenummer: 05014040.9
(22) Anmeldetag: 29.06.2005
(51) Int. Cl.: H01M 2/00, H01M 2/10

(54) **Galvanisches Element**
Galvanic element
Elément galvanique

(30) Priorität: 01.07.2004 DE 102004031975
(43) Veröffentlichungstag der Anmeldung: 04.01.2006
(73) Patentinhaber: VARTA Microbattery GmbH, 73479 Ellwangen (DE)
(72) Erfinder: Miehlich, Philipp, 73450 Neresheim (DE); Hahn, Rainer, 73489 Jagstzell (DE); Schweinstetter, Bernd, 89561 Dischingen (DE); Lösch, Achim, 73463 Westhausen (DE); Ilic, Dejan, 73479 Ellwangen (DE)
(74) Vertreter: Patentanwälte Ruff, Wilhelm, Beier, Dauster & Partner

(56) Entgegenhaltungen:
- EP-A- 1 309 020
- EP-A1- 1 071 147
- EP-A1- 1 422 771
- EP-A2- 0 917 218
- US-A- 5 486 680
- US-A- 5 909 102
- US-B1- 6 461 764

## Beschreibung

Die Erfindung betrifft ein wiederaufladbares galvanisches Element mit einem Gehäuse und mindestens einer Lithium-Ionen-Zelle oder Lithium-Polymer-Zelle, die mit einer Folie ummantelt und innerhalb des Gehäuses angeordnet ist.

Es gibt eine Vielzahl wiederaufladbarer galvanischer Elemente der eingangs genannten Art, d. h. sogenannte battery packs, die in ihrer Konstruktion und Bauweise auf den jeweiligen Einsatzzweck abgestimmt sind. Beispiele für solche galvanischen Elemente finden sich in der EP 0 917 218 A2, der EP 1 071 147 A1 und in der EP 1 422 771 A1. Solche galvanischen Elemente sind jedermann beispielsweise als Akkus oder battery packs für Mobiltelefone (Handys), Taschenrechner, Organizer und dergleichen bekannt. Dabei haben die meisten galvanischen Elemente ein Design, das auf das jeweilige Gerät, für das das galvanische Element vorgesehen ist, abgestimmt ist.

Aufgrund dieser Tatsache können diese galvanischen Elemente (Akkus, battery packs) nicht in verschiedenen Geräten, insbesondere mobilen Geräten, benutzt werden. Dies führt bei den Herstellern solcher galvanicher Elemente dazu, daß nur vergleichsweise geringe Stückzahlen an solchen galvanischen Elementen für die Erstausrüstung der entsprechenden Geräte und für den Ersatz der galvanischen Elemente in diesen Geräten gefertigt werden können. Deshalb können die Entwicklungs- und Herstellungskosten für solche galvanischen Elemente nur schwer amortisiert werden. Das sogenannte return-on-investment kommt deshalb häufig spät oder nie.
Darüber hinaus führt die Vielzahl unterschiedlich gestalteter und konstruierter galvanischer Elemente sowohl beim Hersteller als auch bei den Händlern zu einer aufwendigen und teuren Lagerhaltung, was die Versorgung mit den galvanischen Elementen für den Verbraucher letzten Endes erschwert.
Schließlich führen Designänderungen sowohl beim galvanischen Element als auch bei dem entsprechenden Gerät dazu, daß häufig auch das jeweilige andere Teil (Gerät bzw. galvanisches Element) ausgetauscht werden muß.

Die Erfindung stellt sich deshalb die Aufgabe, ein wiederaufladbares galvanisches Element zur Verfügung zu stellen, das möglichst universell einsetzbar ist. Es soll den Hersteller von Geräten, insbesondere Mobilgeräten, die auf den Einsatz solcher galvanischen Elemente angewiesen sind, in die Lage versetzen, das galvanische Element bei allen seinen Mobilgeräten einsetzbar zu machen. Darüber hinaus soll die Verwendung des galvanischen Elements auch bei Geräten verschiedener Hersteller grundsätzlich realisierbar sein. Zusätzlich und davon unabhängig soll das angestrebte galvanische Element eine möglichst platzsparende Konstruktion und Bauweise aufweisen, ohne daß die Leistungsfähigkeit des galvanischen Elements beeinträchtigt wird.

Diese Aufgabe wird gelöst durch das wiederaufladbare galvanische Element mit den Merkmalen des Anspruchs 1. Bevorzugte Ausführungsformen dieses galvanischen Elements sind in den abhängigen Ansprüchen chen 2 bis 6 dargestellt. Der Wortlaut sämtlicher Ansprüche wird hiermit durch Bezugnahme zum Inhalt dieser Beschreibung gemacht.

Erfindungsgemäß sind bei einem wiederaufladbaren galvanischen Element der eingangs genannten Art Bauteile oder Bauelemente, die für die Funktion des galvanischen Elements notwendig oder zweckmäßig sind, in dem zwischen der Zelle und dem Gehäuse vorhandenen Totvolumen oder Restvolumen, das durch die Kontaktierung der Zelle notwendigerweise entsteht, untergebracht oder angeordnet.

Bei bevorzugten Ausführungsformen des erfindungsgemäßen galvanischen Elements beträgt das Gesamtvolumen des galvanischen Elements insgesamt weniger als 150 % des Volumens der im Gehäuse angeordneten Zellen. Mit anderen Worten beträgt das Totvolumen oder Restvolumen, in dem die erwähnten notwendigen oder zweckmäßigen Bauteile oder Bauelemente erfindungsgemäß untergebracht sind, weniger als 50 % der stromliefernden Zellen, d. h. der sich im Gehäuse befindenden Lithium-lonen-Zellen oder Lithium-Polymer-Zellen. Bei weiter bevorzugten Ausführungsformen der Erfindung beträgt das Gesamtvolumen des galvanischen Elements weniger als 140 %, insbesondere weniger als 130 %, des Volumens der im Gehäuse angeordneten Zellen.

Bei den erwähnten Bauteilen oder Bauelementen, die für die Funktion des galvanischen Elements notwendig oder zweckmäßig sind, handelt es sich zum Einen um Mittel zur Fixierung und/oder Positionierung des galvanischen Elements in einem Gerät, für das das galvanische Element vorgesehen ist. Solche Geräte sind vorzugsweise Mobilgeräte, wie Organizer, Mobiltelefone und dergleichen. Solche Mittel dienen dazu, das galvanische Element in das Gerät einzubringen, beispielsweise einzuführen, und dort zu halten, beispielsweise zu fixieren oder zu arretieren. Weiterhin sind als Bauteile oder Bauelemente, die für die Funktion des galvanischen Elements notwendig oder zweckmäßig sind, elektronische Bauteile oder elektronische Elemente zu nennen, die für die ordnungsgemäße Funktion des galvanischen Elements selbst notwendig oder nützlich sind oder die das Zusammenwirken zwischen galvanischem Element und Gerät betreffen. Vor allem handelt es sich hierbei um eine sogenannte Sicherungselektronik. Eine solche elektronische Sicherheitsschaltung überwacht den Lade- und Entladevorgang des galvanischen Elements und schützt das galvanische Element vor unsachgemäßer Behandlung wie beispielsweise einem externen Kurzschluß. Eine solche Sicherungselektronik wird häufig als PCM (protection circuit module) bezeichnet.

Bei dem erfindungsgemäßen galvanischen Element ist mindestens ein Mittel zur Fixierung und/oder Positionierung vorzugsweise bezüglich von zwei durch das entsprechende Gerät definierten Raumrichtungen, die hier als X-Achse und Y-Achse definiert werden sollen, vorgesehen. Ein solches Mittel kann also das galvanische Element nach seiner Verbindung mit oder nach seinem Einbau in das Gerät in den durch die X-Achse und Y-Achse definierten Ebenen festlegen und festhalten.

Bei dem erwähnten Mittel zur Fixierung und/oder Positionierung kann es sich um eine Nut oder eine gleichwirkende Vertiefung, die mit einem entsprechenden Bau- und/oder Führungselement im Gerät oder Mobilgerät zusammenwirken kann, handeln. Insbesondere weisen derartige Nute und Vertiefungen an einem ihrer Enden, vorzugsweise dem inneren Ende, eine Erweiterung auf, die mit dem entsprechenden Bauelement, beispielsweise einem federnden Element des Geräts zusammenwirken kann. Diese Erweiterung ist vorzugsweise so ausgestaltet, daß eine L-förmige oder T-förmige Nut entsteht.

Bei diesen als bevorzugt beschriebenen Ausführungsformen des galvanischen Elements sind vorzugsweise zwei oder mehr Nuten vorgesehen, wobei es sich hierbei insbesondere um zwei Nuten handelt. Diese Nuten, insbesondere die beiden Nuten, sind insbesondere in einem definierten Abstand voneinander vorgesehen, so daß eine Fixierung und/oder Positionierung aller erfindungsgemäßen galvanischen Elemente, die diesen gleichen Abstand der Nuten aufweisen, in einem entsprechenden Gerätetyp oder in einer entsprechend konstruierten Ladestation möglich ist.

Hervorzuheben ist, daß bei einer Ausgestaltung der Mittel zur Fixierung und/oder Positionierung als Nuten oder gleichwirkende Vertiefungen die Außenmaße des Gehäuses und damit des galvanischen Elements insgesamt nicht beeinträchtigt werden, so daß auch in dieser Hinsicht eine platzsparende Konstruktion gewährleistet ist. Solche Nuten und gleichwirkende Vertiefungen befinden sich ebenfalls innerhalb des eingangs erläuterten Totvolumens oder Restvolumens, so daß auch hier das entscheidende Merkmal der Erfindung realisiert ist.

In Weiterbildung ist bei weiteren bevorzugten Ausführungsformen des erfindungsgemäßen galvanischen Elements mindestens ein Mittel zur Fixierung und/oder Positionierung des galvanischen Elements bezüglich der durch das entsprechende Gerät definierten dritten Raumrichtung, die als Z-Achse definiert werden soll, vorgesehen. Hierbei kann es sich vorzugsweise um mindestens eine kerbenartige Vertiefung handeln. Bei solchen bevorzugten Ausführungsformen ist gewährleistet, daß das galvanische Element im oder am entsprechenden Gerät oder Mobilgerät in allen drei Raumrichtungen festgelegt und fixiert ist.

Das erfindungsgemäße galvanische Element weist bei weiter bevorzugten Ausführungsformen Mittel zur Kontaktierung auf, die an mindestens zwei Seitenflächen des Gehäuses vorgesehen sind. Auf diese Weise besteht für die Hersteller der Geräte, für die das galvanische Element vorgesehen ist, eine Variationsmöglichkeit, wo die Kontaktelemente am Gerät vorgesehen sein sollen. Als Folge davon kann das erfindungsgemäße galvanische Element bei solchen Ausführungsformen mit Geräten mit unterschiedlicher Konstruktion der Kontaktelemente an den Geräten zusammenwirken.

Bei solchen Ausführungsformen sind die Mittel zur Kontaktierung insbesondere an zwei Seitenflächen, vorzugsweise an zwei aneinander angrenzenden Seitenflächen, des Gehäuses vorgesehen. In solchen Fällen handelt es sich bei den Mitteln zur Kontaktierung vorzugsweise um im wesentlichen L-förmige Kontaktstreifen, wie sie im Zusammenhang mit den Figuren noch näher erläutert werden. Solche Kontaktstreifen gewährleisten auf der Seite des galvanischen Elements, daß ein elektrischer Kontakt zum Gerät an beiden Seitenflächen des Gehäuses realisiert werden kann.

Bei den erwähnten als Einzelkontakte ausgebildeten Kontaktstreifen sind diese bei der Herstellung des galvanischen Elements vorzugsweise zunächst an ihrem einen Ende über ein laschenartiges Element zu einem Kontaktsatz miteinander verbunden. Die Bereitstellung eines solchen Kontaktsatzes hat entscheidende Vorteile im Herstellungsverfahren selbst. Dabei ist das laschenartige Element so ausgestaltet, daß es auf einfache Weise, beispielsweise durch eine Sollbruchstelle, von den Einzelkontakten entfernt werden kann. Dementsprechend kann man das laschenartige Element auch als Abbruchlasche bezeichnen. Diese Abbruchlasche weist vorzugsweise mindestens eine Bohrung, vorzugsweise zwei Bohrungen, zum Positionieren des Kontaktsatzes auf einer Lithium-lonen-Zelle oder Lithium-Polymer-Zelle bzw. deren Ummantelung auf. Zu diesem Zweck ist beispielsweise auf dieser Ummantelung eine Ausstülpung oder Materialverdickung vorgesehen. Auf diese Weise ist die genaue Lage der Einzelkontakte definiert. Nach Verbinden des Kontaktsatzes mit den zugehörigen Bauteilen der Zelle wird die Abbruchlasche an der Sollbruchstelle durch Biegen von den Einzelkontakten getrennt. Diese Konstruktion wird später im Zusammenhang mit den Figuren ebenfalls noch näher erläutert.

Schließlich ist noch hervorzuheben, daß das erfindungsgemäße galvanische Element bei den zuletzt diskutierten bevorzugten Ausführungsformen so konstruiert sein kann, daß die Mittel zur Kontaktierung durch im Gehäuse vorgesehene Ausnehmungen von außen zugänglich sind.

Die Vorteile des beanspruchten und beschriebenen wiederaufladbaren galvanischen Elements sind vielfältig. So handelt es sich hier um ein universell einsetzbares galvanisches Element, das bei entsprechender Konstruktion der Geräte, insbesondere Mobilgeräte, für die es vorgesehen ist, variabel eingesetzt werden kann. Es ist für eine Kontaktierung mit Standardkomponenten ausgelegt, und eine Kontaktierung ist von mindestens zwei Seiten her möglich. Die Fixierungs- und Positioniermöglichkeiten sind vielfältig. Auf diese Weise kann das galvanische Element, beispielsweise in unterschiedlichen Größen und Abmessungen, auf einfache Weise in das jeweilige Design des Geräts/Mobilgeräts einbezogen werden. Damit werden für die anderen Gerätehersteller sowohl Entwicklungszeit als auch Entwicklungskosten gespart. Auf der anderen Seite wird ein galvanisches Element mit hoher Energiedichte zur Verfügung gestellt, das dem neuesten Stand der Batterietechnologie entspricht. Dies ist insbesondere bei den eingangs erwähnten Lithium-Polymer-Zellen der Fall, die wie die entsprechenden Lithium-lonen-Zellen mit einer Folie ummantelt sind, d. h. ein inneres Foliengehäuse besitzen. Man spricht hier auch von galvanischen Elementen des Pouch-Typs.

Schließlich kann über einen im Tot-/Restvolumen angeordneten Erkennungswiderstand das galvanische Element eindeutig identifiziert werden. Dieser Erkennungswiderstand ist über einen Kontakt von dem entsprechenden Gerät bzw. dem Ladegerät meßbar. Auf diese Weise kann eine Fehlbestückung des Geräts mit einem "falschen" galvanischen Element ausgeschlossen werden.

Die genannten Vorteile und weitere Vorteile der Erfindung ergeben sich aus der folgenden Figurenbeschreibung in Verbindung mit den Unteransprüchen. Dabei können die einzelnen Merkmale jeweils für sich allein oder in Kombination miteinander verwirklicht sein.

In den Zeichnungen zeigen
- Fig. 1: den Aufbau eines erfindungsgemäßen galvanischen Elements vor dem Zusammenbau,
- Fig. 2: den Aufbau des erfindungsgemäßen galvanischen Elements gemäß Fig. 1 nach dem Zusammenbau,
- Fig. 3: eine Detailansicht des erfindungsgemäßen galvanischen Elements gemäß Fig. 2,
- Fig. 4: eine schematische Detailansicht des erfindungsgemäßen galvanischen Elements gemäß Fig. 2 und
- Fig. 5: einen Kontaktsatz von vier Einzelkontakten, wie er in dem erfindungsgemäßen galvanischen Element gemäß Fig. 1 bis 4 einsetzbar ist.

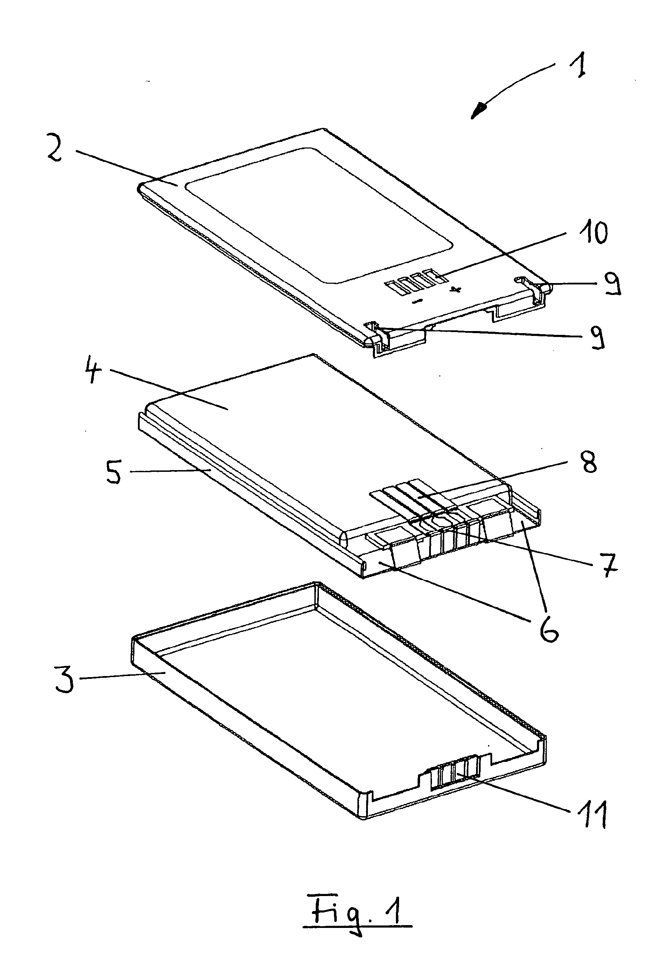

Wie in Fig. 1 dargestellt, ist das erfindungsgemäße galvanische Element 1 vor seinem endgültigen Zusammenbau im wesentlichen aus drei Teilen aufgebaut, nämlich aus einem Gehäuseoberteil 2 aus Kunststoff, einem Gehäuseunterteil 3 aus Kunststoff und einer Zelle 4, beispielsweise einer Lithium-Polymer-Zelle. Die Zelle 4 ist dabei mit einer in Fig. 1 nicht näher bezeichneten Folie ummantelt. Bei der Zelle 4 handelt es sich um eine dem Fachmann bekannte Zelle vom Pouch-Typ.

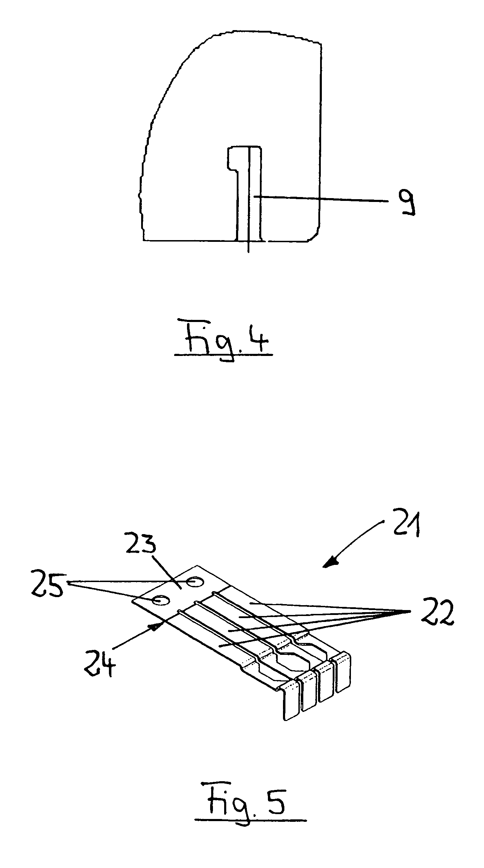

Wie Fig. 1 ebenfalls zu entnehmen ist, befindet sich die folienummantelte Zelle 4 auf einem Gehäuseinnenteil 5, das wannenartig ausgebildet ist und letztlich den Zusammenbau des galvanischen Elements erleichtert. Gemäß Fig. 1 entsteht auf dem Gehäuseinnenteil 5 an der Seite der Zelle 4, die deren Kontaktierung trägt, ein Totvolumen/Restvolumen 6 zwischen den durch das Gehäuseoberteil 2 und das Gehäuseunterteil 3 bzw. Gehäuseinnenteil 5 definierten Begrenzungen und den Begrenzungen der Zelle 4. Bei dem erfindungsgemäßen galvanischen Element 1 ist dieses Totvolumen 6 nun dadurch ausgenutzt, daß dort zum einen ein elektronisches Bauteil in Form einer sogenannten Sicherungselektronik 7 (protection circuit module, PCM) untergebracht ist. Zum anderen befindet sich in diesem Totvolumen 6 das Mittel 8, das zur Kontaktierung der Zelle 4 und damit des galvanischen Elements 1 mit einem entsprechenden Gerät vorgesehen ist. Dieses Kontaktierungsmittel 8 wird im Zusammenhang mit der Fig. 5 noch näher beschrieben.

Schließlich wird das Totvolumen 6 bei dem erfindungsgemäßen galvanischen Element 1 noch zur Aufnahme von Mitteln 9 zur Fixierung und Positionierung des galvanischen Elements 1 in einem entsprechenden Gerät genutzt. Diese Fixierungs- und Positionierungsmittel 9 sind am Gehäuseoberteil 2 ausgebildet und ragen im zusammengebauten Zustand in das Totvolumen 6 hinein. Auch diese Fixierungs- und Positionierungsmittel 9 werden im folgenden noch weiter beschrieben.

Schließlich weisen das Gehäuseoberteil 2 und das Gehäuseunterteil 3 Ausnehmungen 10 bzw. 11 auf, durch die hindurch das Kontaktierungsmittel 8 von außen zugänglich ist.

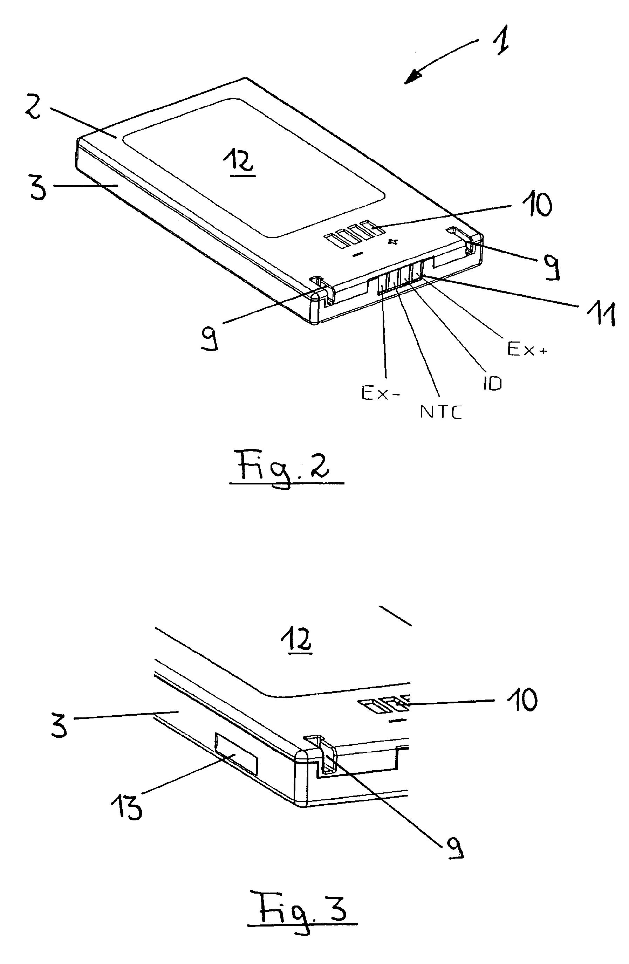

Das erfindungsgemäße galvanische Element 1 ist in Fig. 2 im zusammengebauten Zustand dargestellt. Auch hier sind zunächst das Gehäuseoberteil 2 und das Gehäuseunterteil 3 zu erkennen. Diese beiden Teile können zu einem vollständigen Gehäuse standardmäßig beispielsweise mit Ultraschall verschweißt oder mit Hilfe einer Clip-Technik verschlossen sein. Im Inneren des aus dem Gehäuseoberteil 2 und dem Gehäuseunterteil 3 gebildeten Gehäuses befinden sich (in Fig. 2 nicht dargestellt) das Gehäuseinnenteil 5 mit der Zelle 4 sowie die Sicherungselektronik 7 und das Kontaktierungsmittel 8. In Fig. 2 jedoch gut zu erkennen ist, daß die Fixierungs- und Positionierungsmittel 9 ebenfalls von dem innerhalb des Gehäuses gebildeten Totvolumen 6 aufgenommen werden. Diese Positionierungs- und Fixierungsmittel 9 besitzen im dargestellten Fall die Form L-förmiger Nuten, was anhand von Fig. 4 noch weiter erläutert wird.

Weiter sind auch in Fig. 2 die Ausnehmungen 10 am Gehäuseoberteil 2 bzw. 11 am Gehäuseunterteil 3 zu erkennen. Durch diese Ausnehmungen 10 und 11 hindurch sind die entsprechenden Oberflächen des Kontaktierungsmittels 8 von außen zugänglich, um auf diese Weise den elektrischen Kontakt herzustellen. Wie durch die Beschriftung unterhalb der Ausnehmung 10 auf dem Gehäuseoberteil 2 (+,-) zu erkennen ist, dient die Ausnehmung 10 zur Kontaktierung der entsprechenden Pole des Geräts, für das das galvanische Element 1 vorgesehen ist. Im vorliegenden Fall können über die Ausnehmung 11 am Gehäuseunterteil 3 zusätzliche Funktionen und Parameter des galvanischen Elements 1 abgefragt werden, z. B. Identifizierung des galvanischen Elements (Kontakt ID), Temperaturabfrage (Kontakt NTC) und ebenfalls Kontaktierung der entsprechenden Pole des Geräts/Verbrauchers.

Schließlich ist in Fig. 2 an der Oberseite des Gehäuseoberteils 2 eine leichte Vertiefung 12 dargestellt, die für die Aufnahme eines Etiketts für das galvanische Element 1 vorgesehen ist. Auf diese Weise werden die Abmessungen des galvanischen Elements 1 durch eine solche optische Identifizierung nicht beeinträchtigt.

Fig. 3 zeigt ein weiteres Detail eines galvanischen Elements 1, das in den Fig. 1 und 2 nicht dargestellt ist. So befindet sich gemäß Fig. 3 an mindestens einer Seitenfläche des Gehäuseunterteils 3, vorzugsweise an zwei gegenüberliegenden Seitenflächen, ein weiteres Fixierungs- und Positionierungsmittel 13 in Form einer kerbenartigen Vertiefung 13, die ebenfalls zum Einführen und Festlegen des galvanischen Elements in einem Gerät vorgesehen ist. Ein solches Positionierungs- und Fixierungsmittel dient zur weiteren Sicherung des galvanischen Elements 1 in der entsprechenden Aufnahmeöffnung des Geräts. Um die Lage dieses Positionierungs- und Fixierungsmittels 13 besser verständlich zu machen, sind in Fig. 3 zusätzlich noch das Positionierungs- und Fixierungsmittel 9, die Ausnehmung 10 und die Vertiefung 12 dargestellt.

In Fig. 4 ist ein Positionierungs- und Fixierungsmittel 9, das gemäß Fig. 1 und 2 am Gehäuseoberteil 2 ausgebildet ist, schematisch nochmals dargestellt. Fig. 4 soll die Ausbildung dieses Positionierungs- und Fixierungsmittels 9 als L-förmige Nut deutlich machen. Wie Fig. 4 anschaulich macht, kann eine solche L-förmige Nut zur Einführung und Fixierung/Arretierung eines federnd ausgebildeten Elements am Gerät/ Mobilgerät, das das galvanische Element aufnehmen soll, genutzt werden.

In Fig. 5 ist schließlich das bereits in Fig. 1 gezeigte Kontaktierungsmittel 8 näher erläutert. Fig. 5 zeigt dieses Kontaktierungsmittel in dem Zustand, in welchem es für den Zusammenbau des galvanischen Elements 1 benutzt wird.

Dementsprechend liegt dieses Kontaktierungsmittel zunächst in Form eines Kontaktsatzes 21 vor, der aus vier nebeneinander liegenden Einzelkontakten in Form von Kontaktstreifen 22 besteht. Diese Kontaktstreifen 22 sind im Querschnitt L-förmig ausgebildet, so daß an zwei um ca. 90 Grad gegeneinander abgewinkelten Oberflächen eine Kontaktfläche entstehen kann. Diese Anordnung erschließt sich leicht unter Einbeziehung der Anordnung des Mittels 8 in Fig. 1.
An ihrem einen Ende sind die einzelnen Kontaktstreifen 22 über ein laschenartiges Element 23 miteinander verbunden. Zwischen den Enden der Kontaktstreifen 22 und dem laschenartigen Element 23 befindet sich eine Sollbruchlinie 24. Außerdem weist das laschenartige Element 23 zwei Öffnungen 25 auf, mit deren Hilfe der Kontaktsatz 21 an entsprechenden, in Fig. 1 nicht dargestellten, Erhebungen auf der Außenseite der Zelle 4 positioniert werden kann.

Sind dann die Kontaktstreifen 22 mit den entsprechenden Bauelementen zur Kontaktierung fest verbunden, kann das laschenartige Element 23 als Abbruchlasche durch einfaches Biegen an der Sollbruchlinie 24 entfernt werden. Dadurch liegen dann die Kontaktstreifen 22 wieder als getrennte Einzelkontakte vor.

## Patentansprüche

1. Wiederaufladbares galvanisches Element (1) mit
- einem Gehäuse (2, 3),
- mindestens einer Lithium-lonen-Zelle oder Lithium-Polymer-Zelle (4), die mit einer Folie ummantelt ist und innerhalb des Gehäuses angeordnet ist,
- einer Sicherungselektronik (7) und
- Mitteln zur Fixierung und/oder Positionierung (9, 13) des galvanischen Elements in einem Gerät,
**dadurch gekennzeichnet, daß** die Mittel zur Fixierung und/oder Positionierung und die Sicherungselektronik in dem zwischen der Zelle und dem Gehäuse vorhandenen Totvolumen (6), das durch die Kontaktierung der Zelle entsteht, untergebracht oder angeordnet sind, und dass das Gehäuse als Mittel zur Fixierung und/oder Positionierung (9, 13) mindestens eine kerben- oder nutartige Vertiefung aufweist, die das Totvolumen ausnutzt.

2. Wiederaufladbares galvanisches Element nach Anspruch 1, **dadurch gekennzeichnet, daß** das Gesamtvolumen des galvanischen Elements weniger als 150 % des Volumens der im Gehäuse angeordneten Zellen beträgt.

3. Wiederaufladbares galvanisches Element nach einem der vorhergehenden Ansprüche, **dadurch gekennzeichnet, daß** im Totvolumen (6) Mittel zur Kontaktierung (8) des galvanischen Elements mit einem vorzugsweise mobilen Gerät untergebracht oder angeordnet sind.

4. Wiederaufladbares galvanisches Element nach einem der Ansprüche 1 bis 3, **dadurch gekennzeichnet, daß** Mittel zur Kontaktierung des galvanischen Elements mit dem entsprechenden Gerät an mindestens zwei Seitenflächen des Gehäuses vorgesehen sind.

5. Wiederaufladbares galvanisches Element nach Anspruch 4, **dadurch gekennzeichnet, daß** es sich bei den Mitteln zur Kontaktierung um L-förmige Kontaktstreifen (22) handelt.

6. Wiederaufladbares galvanisches Element nach Anspruch 4 oder 5, **dadurch gekennzeichnet, daß** die Mittel zur Kontaktierung durch im Gehäuse vorgesehene Ausnehmungen (10, 11) von außen zugänglich sind.

## Claims

1. A rechargeable electrochemical cell (1) comprising
- a housing (2, 3),
- at least one lithium-ion cell or lithium-polymer cell (4) encased by a film and arranged inside the housing,
- a protective electronic device (7), and
- means for fixing and/or positioning (9, 13) the electrochemical element in an apparatus,
**characterized in that** the means for fixing and/or positioning and the protective electronic device are accommodated or disposed in the dead volume (6) which is produced by contacting the cell and located between the cell and the housing, and **in that** the housing includes as means for fixing and/or positioning (9, 13) at least one notch-type or groove-type recess utilising the dead volume.

2. The rechargeable electrochemical cell according to claim 1, **characterized in that** the total volume of the electrochemical cell is less than 150 % of the volume of the cells arranged within the housing.

3. The rechargeable electrochemical cell according to any of the preceding claims, **characterized in that** accommodated or disposed in the dead volume (6) are means for contacting (8) the electrochemical cell with a preferably mobile apparatus.

4. The rechargeable electrochemical cell according to any of claims 1 to 3, **characterized in that** means for contacting the electrochemical cell with the corresponding apparatus are provided on at least two side faces of the housing.

5. The rechargeable electrochemical cell according to claim 4, **characterized in that** the means for contacting are L-shaped contact strips (22).

6. The rechargeable electrochemical cell according to claim 4 or 5, **characterized in that** the means for contacting are accessible from the outside through recesses (10, 11) provided in the housing.

## Revendications

1. Elément galvanique rechargeable (1) présentant :
un boîtier (2, 3),
au moins une pile à ions lithium ou une pile (4) à polymère et lithium englobée dans un film et disposée à l'intérieur du boîtier,
une électronique de protection (7) et
des moyens (9, 13) de fixation et/ou de positionnement de l'élément galvanique dans un appareil,
**caractérisé en ce que**
les moyens de fixation et/ou de positionnement et l'électronique de protection sont placés ou disposés dans le volume mort (6) présent entre la pile et le boîtier et résultant des contacts de raccordement de la pile et
**en ce que** le boîtier présente comme moyens (9, 13) de fixation et/ou de positionnement au moins un creux en forme d'entaille ou de rainure qui occupe le volume mort.

2. Elément galvanique rechargeable selon la revendication 1, **caractérisé en ce que** le volume total de l'élément galvanique représente moins de 150 % du volume des piles disposées dans le boîtier.

3. Elément galvanique rechargeable selon l'une des revendications précédentes, **caractérisé en ce que** des moyens (8) assurant le contact de l'élément galvanique avec un appareil de préférence mobile sont installés ou disposés dans le volume mort (6).

4. Elément galvanique rechargeable selon l'une des revendications 1 à 3, **caractérisé en ce que** des moyens assurant le contact de l'élément galvanique avec l'appareil correspondant sont prévus sur au moins deux surfaces latérales du boîtier.

5. Elément galvanique rechargeable selon la revendication 4, **caractérisé en ce que** les moyens de mise en contact sont des rubans de contact (22) en forme de L.

6. Elément galvanique rechargeable selon les revendications 4 ou 5, **caractérisé en ce que** les moyens de mise en contact sont accessibles de l'extérieur par des découpes (10, 11) prévues dans le boîtier.
